# EUROPÄISCHE PATENTSCHRIFT

(11) **EP 3 017 348 B1**
(45) Veröffentlichungstag und Bekanntmachung des Hinweises auf die Patenterteilung: **26.04.2017**
(21) Anmeldenummer: 14747799.6
(22) Anmeldetag: 04.07.2014
(51) Int. Cl.: G06F 1/16

(54) **VERFAHREN ZUR ERGONOMISCH KORREKTEN JUSTIERUNG EINES BILDSCHIRMES SOWIE SET ZUR DURCHFÜHRUNG DESSELBEN**
METHOD FOR AN ERGONOMICALLY CORRECT ADJUSTMENT OF A SCREEN, AND SET FOR CARRYING OUT SAME
PROCÉDÉ D'AJUSTAGE ERGONOMIQUE CORRECT D'UN ÉCRAN ET ENSEMBLE POUR RÉALISER CE PROCÉDÉ

(30) Priorität: 04.07.2013 AT 504402013
(43) Veröffentlichungstag der Anmeldung: 11.05.2016
(73) Patentinhaber: Scherübel, Friedrich, 8045 Graz (AT)
(72) Erfinder: SLANA-JÖBSTL, Manfred, 8047 Kainbach bei Graz (AT)
(74) Vertreter: Wirnsberger, Gernot
(86) Internationale Anmeldenummer: PCT/AT2014/050153
(87) Internationale Veröffentlichungsnummer: WO 2015/000011

(56) Entgegenhaltungen:
- US-A1- 2004 151 491
- US-A1- 2011 137 211
- US-B2- 7 188 772

## Beschreibung

Die Erfindung betrifft ein Verfahren zur ergonomisch korrekten Justierung eines Bildschirmes.

Weiter betrifft die Erfindung ein Set zur Durchführung eines derartigen Verfahrens.

Untersuchungen zeigen regelmäßig, dass Bildschirmarbeit zu Gesundheitsbeschwerden führt, welche unter anderem durch eine ergonomisch nicht optimale Körperhaltung am Arbeitsplatz verursacht sind. Diese ist häufig Folge eines falsch eingestellten Bildschirmes. Ein Bildschirm ist dann korrekt eingestellt, wenn der Bildschirm so geneigt ist, dass eine Bildschirmoberfläche senkrecht zu einer Blicklinie des Betrachters liegt, wobei ein Betrachtungswinkel der zentrisch auf die Bildschirmoberfläche auftreffenden Blickline etwa 90° ist. Weiter ist es ergonomisch günstig, wenn eine Blicklinie 15° bis 35° aus einer Waagrechten abgesenkt ist.

Eine ergonomisch bevorzugte Entfernung eines Benutzers vom Bildschirm entspricht etwa einer Länge eines Armes des Benutzers. Ist der Bildschirm nicht ergonomisch korrekt aufgestellt, insbesondere in einer falschen Höhe positioniert und nicht in einem korrekten Bildschirmwinkel gekippt, nimmt der Benutzer unbewusst eine diese Fehlpositionierung ausgleichende Körperhaltung ein, welche zu einer Fehlstreckung einer Halswirbelsäule des Benutzers führt. Eine Fehlstreckung der Halswirbelsäule führt in der Folge zu kompensatorischen und schmerzhaften Veränderungen in den Bereichen von Brustwirbelsäule und Lendenwirbelsäule. Darüber hinaus verursacht ein falsches Sitzen mit einem "Rundrücken" einen einseitigen Druck auf Bandscheiben.

Durch falsch eingestellte Bildschirme ergibt sich aufgrund von vermehrten Krankenständen sowie Therapiekosten ein hoher volkswirtschaftlicher Schaden. Es hat sich gezeigt, dass vielen Benutzern eine Problematik eines falsch eingestellten Bildschirmes nicht bewusst ist und auch ein Verfahren für eine korrekte Positionierung des Bildschirmes fehlt, welches einfach und schnell anwendbar ist.

Das Dokument US 7 188 772 B2 offenbart ein Verfahren zur ergonomisch korrekten Justierung eines Bildschirmes.

Die Dokumente US 2004/0151491 A1 und US 2011/0137211 A1 offenbaren Gegenstände mit blickwinkelabhängigen Erscheinungsformen, um Benutzern anzuzeigen, wann eine ergonomisch günstige Körperhaltung relativ zu einem bestimmten Objekt erreicht ist.

Aus dem Stand der Technik ist ferner eine reflektierende Einrichtung bekannt geworden, welche an einem Bildschirmrand mit dem Bildschirm verbunden wird, um bei einer Justierung des Bildschirmes unter Einsatz einer Reflexion des Benutzers an der Einrichtung eine verbesserte Bildschirmposition zu erreichen. Nachteilig bei diesem Verfahren ist, dass dabei nur der Bildschirmrand korrekt justiert werden kann und ein Betrachtungswinkel zu einer Mitte des Darstellungsbereiches, auf welchen ein Blick des Benutzers gerichtet ist, falsch ausgerichtet sein kann, sodass die vorstehend beschriebenen Gesundheitsbeschwerden nicht verhinderbar sind.

Aufgabe der Erfindung ist es daher, ein Verfahren der eingangs genannten Art anzugeben, mit welchem durch Bildschirmarbeit bedingte Gesundheitsbeschwerden reduzierbar sind. Weiter soll das Verfahren besonders unkompliziert umsetzbar und mit einfachen Hilfsmitteln durchführbar sein.

Darüber hinaus soll ein Set zur Durchführung eines derartigen Verfahrens angegeben werden, welches einfach und kostengünstig herstellbar ist.

Die erste Aufgabe wird durch ein Verfahren der eingangs genannten Art gelöst, wobei ein Gegenstand lösbar auf einem Darstellungsbereich des Bildschirmes angeordnet wird, mit welchem ein vor dem Bildschirm sitzender Benutzer auf einer Abbildung dargestellt wird, wonach eine Position des Bildschirmes variiert wird, bis eine Darstellung des Benutzers innerhalb vordefinierter Grenzen der Abbildung ist.

Dies ermöglicht eine besonders einfache Positionierung des Bildschirmes, wobei sowohl ein optimaler Betrachtungswinkel als auch eine optimale Höhe des Bildschirmes mit einfachsten Hilfsmitteln eingestellt werden. Dabei kann grundsätzlich jeder Gegenstand eingesetzt werden, mit welchem ein Abbild eines vor dem Bildschirm befindlichen Benutzers herstellbar und insbesondere auch darstellbar ist, wie beispielsweise eine Einrichtung zur Bildaufnahme, Bildverarbeitung und Bilddarstellung. Die Anordnung der vordefinierten Grenzen auf der Abbildung ist dabei insbesondere abhängig von einer Position des auf dem Darstellungsbereich angeordneten Gegenstandes relativ zu einer Mitte des Darstellungsbereiches. So kann eine korrekte Positionierung auch bereits vorliegen, wenn die Darstellung des Benutzers nur teilweise innerhalb der Abbildung ist. Durch eine vorzugsweise temporäre Positionierung des Gegenstandes im Darstellungsbereich wird einerseits sichergestellt, dass der Darstellungsbereich korrekt ausgerichtet ist. Andererseits kann der Gegenstand nach einer Justierung wieder entfernt und ein weiterer Bildschirm mit dem erfindungsgemäßen Verfahren justiert werden, sodass mit einem Gegenstand Bildschirme mit verschiedenen Abmessungen und Ausführungen justiert werden können. Weiter hat sich gezeigt, dass durch ein derartiges Verfahren sowie eine einfache Konzeption des dafür erforderlichen Gegenstandes ergonomische Zusammenhänge einem Benutzer gut zugänglich gemacht werden. Dadurch werden ein hoher Lerneffekt sowie positiver Effekt für eine Gesundheit des Benutzers erreicht.

Günstig ist es, wenn ein reflektierender Gegenstand eingesetzt wird, welcher bevorzugt eine Markierung aufweist. Dadurch wird das Verfahren vereinfacht, weil beispielsweise ein beliebiger Spiegel mit dem Bildschirm verbunden werden kann, wobei eine ergonomisch korrekte Position des Bildschirmes vorliegt, wenn sich der Benutzer unter Einhaltung einer ergonomisch korrekten Sitzposition im Spiegel sieht. Die Abbildung wird dabei durch den reflektierenden Gegenstand erzeugt und wiedergegeben. Dabei hat es sich bewährt, wenn eine reflektierende Oberfläche des reflektierenden Gegenstandes parallel zum Darstellungsbereich an diesem angeordnet wird. Es versteht sich, dass die reflektierende Oberfläche beliebig spiegelnd oder holografisch ausgeführt sein kann, wobei auch spiegelnde Materialien mit Interferenzwirkung sowie spiegelnde und gleichzeitig transparente Materialien eingesetzt werden können. Damit kann auf einfache Weise ein Betrachtungswinkel von 90° eingestellt werden, da dieser Betrachtungswinkel erreicht ist, wenn sich ein Benutzer in einer Reflexion am reflektierenden Gegenstand zentrisch sieht. Am Spiegel können Markierungen vorgesehen sein, um eine optimale Position zu erkennen, bis zu welcher der Bildschirm entsprechend in Höhe und Bildschirmwinkel eingestellt werden muss. Um eine korrekte Einstellung zu vereinfachen, können diese Markierungen eine Form eines Gesichtes aufweisen. Dadurch werden die Grenzen auf einfache Weise definiert, innerhalb derer die Darstellung des Benutzers bei korrekter Positionierung des Bildschirmes auf der Abbildung ist.

Das Verfahren ist mit geringen Kosten umsetzbar, wenn ein als optisches Speichermedium ausgebildeter Gegenstand eingesetzt wird, insbesondere eine CD, eine DVD oder eine Blu-Ray-Disc. Dadurch ist einerseits aufgrund einer flachen und reflektierenden Ausbildung derartiger Speichermedien eine genaue Positionierung möglich. Andererseits können auf dem Speichermedium eine Anleitung für die Durchführung des Verfahrens oder Werbebotschaften in digitaler Form enthalten sein, sodass der Benutzer einen zusätzlichen Mehrwert erhält. Vorzugsweise wird eine sogenannte hochreflektierende DVD eingesetzt, welche einen höheren Reflexionsgrad aufweist als herkömmliche DVDs, insbesondere mehr als 90 %, vorzugsweise mehr als 95 %. Damit ist das Verfahren auch bei schlechten Lichtverhältnissen durchführbar. Es kann jedoch auch ein Spiegel aus Kunststoff eingesetzt werden, beispielsweise ein Spiegel aus Acryl, aus Polystyrol oder aus Polycarbonat.

Eine einfache Verbindung des Gegenstandes mit dem Bildschirm ergibt sich, wenn der Gegenstand mit einem Adapter lösbar verbunden wird, welcher mit dem Darstellungsbereich des Bildschirmes lösbar verbindbar ist. In einer einfachen Ausführung kann dies beispielsweise eine doppelseitige Klebefolie sein. Es kann jedoch auch ein Adapter eingesetzt werden, welcher mit dem Gegenstand beispielsweise formschlüssig verbindbar ist und durch eine reversible Hafttechnik bzw. Saugtechnik, insbesondere mittels Adhäsion, mit dem Bildschirm lösbar verbunden wird. Eine Verbindung zwischen Gegenstand, Adapter und Bildschirm kann dabei insbesondere durch eine reversible Klebetechnik erfolgen, wobei ein mehrfach haftender Klebstoff eingesetzt wird. Üblicherweise wird eine Klebefolie oder eine Adhäsionsfolie eingesetzt, welche bei Nachlassen einer Anhaftkraft, beispielsweise aufgrund oftmaliger Benutzung, durch eine neue Folie ersetzt wird. In der Regel ist eine Klebeschicht zur Befestigung der Folie auf dem Gegenstand derart ausgebildet, dass diese von Hand vom Gegenstand entfernt werden kann, ohne Kleberückstände auf dem Gegenstand zu hinterlassen, sodass anschließend eine neue Folie aufgebracht werden kann. Alternativ kann der Gegenstand direkt am Bildschirm angeordnet werden.

Um eine ergonomisch besonders bevorzugte Position des Bildschirmes zu erreichen, ist es vorteilhaft, wenn der Gegenstand zentrisch im Darstellungsbereich angeordnet wird. Dadurch kann ein Betrachtungswinkel von 90° zu einer Mitte des Darstellungsbereiches bzw. zu einer Bildschirmmitte sehr einfach eingestellt werden.

Günstig ist es, wenn der Bildschirm mit einer Entfernung zum Benutzer positioniert wird, welche einer Länge eines Armes des Benutzers entspricht. Dies ermöglicht eine einfache Positionierung des Bildschirmes in einer optimalen Entfernung zum Benutzer. Auf besonders einfache Weise kann dies durch Ausstrecken eines Armes des Benutzers bis zum Bildschirm unter gleichzeitiger Justierung des Bildschirmes erfolgen. Alternativ kann die entsprechende Länge mit bekannten Verfahren zur Abstandsbestimmung gemessen werden und der Bildschirm unter Vergleich eines dabei ermittelten Messwerts mit einem Referenzabstand justiert werden, der sich aus einer Anatomie des Benutzers ergibt.

Um eine Fehlstreckung der Wirbelsäule zu vermeiden, ist es weiter von Vorteil, wenn ein ergonomisch günstiger Absenkungswinkel mittels einer unter einem definierten Winkel mit dem Darstellungsbereich verbundenen Libelle eingestellt wird. Als Absenkungswinkel wird dabei der Winkel bezeichnet, um welchen eine Blicklinie des Betrachters aus einer Horizontalen abgesenkt werden muss, um senkrecht auf den Darstellungsbereich zu treffen. Ergonomisch günstig ist ein Absenkungswinkel von 15° bis 35°. Der Absenkungswinkel entspricht somit auch einem Winkel, um welchen der Darstellungsbereich gegenüber einer Vertikalen geneigt ist. Grundsätzlich kann dazu mit dem Darstellungsbereich jede beliebige Einrichtung zur Absolutwinkelmessung verbunden werden, welche ein Einstellen eines definierten Absenkungswinkels ermöglicht, wie ein mit einer Winkelskala versehenes Lot, ein Beschleunigungssensor oder dergleichen. Als konstruktiv besonders einfach hat es sich erwiesen, wenn eine mit einer Flüssigkeit und einer Luft- bzw. Gasblase gefüllte, schwach gebogene Kunststoff- oder Glasröhre eingesetzt wird, die auch Libelle genannt wird. Dazu wird die Libelle vorzugsweise unter einem zum Absenkungswinkel komplementären Winkel mit dem Darstellungsbereich lösbar verbunden, sodass anhand einer Position der Luftblase in der Libelle eine korrekte Justierung des Darstellungsbereiches relativ zu einer Vertikalen einfach ermittelt werden kann. Vorzugsweise wird die Libelle dabei an einem Libellenadapter befestigt, welcher mit Vorteil durch eine Adhäsionsfolie wie einer Gecko-Folie mit dem Darstellungsbereich lösbar verbindbar ist und in der Regel einen ersten Schenkel und einen zweiten Schenkel aufweist. Die beiden Schenkel sind dabei üblicherweise unter einem zum Absenkungswinkel komplementären Winkel starr verbunden, wobei die Gecko-Folie meist am ersten Schenkel rückseitig angeordnet ist. Am zweiten Schenkel ist die Libelle befestigt, sodass die Libelle bei Anordnung des Libellenadapters am Darstellungsbereich in einer annähernd waagerechten Position ist, wenn der Darstellungsbereich um den definierten Absenkungswinkel aus der Vertikalen ausgelenkt ist. Alternativ können die Schenkel auch um eine Drehachse drehbar verbunden sein, sodass mit dem Libellenadapter verschiedene Absenkungswinkel einstellbar sind. Es versteht sich, dass die Libelle auch auf jede andere geeignete Weise mit dem Bildschirm verbunden werden kann, beispielsweise durch einen Saugnapf oder durch eine reversible Klebetechnik.

Wenn ein Saugnapf zur Befestigung des Adapters, des Gegenstandes oder der Libelle eingesetzt wird, hat es sich als vorteilhaft erwiesen, dass der Saugnapf in eine rückseitige Ausnehmung des Adapters, des Gegenstandes oder der Libelle integriert und durch ein Durchgangsloch von einer Vorderseite aus betätigbar ist.

Der Libellenadapter kann dabei für eine einfache Bauweise in den Adapter zur Aufnahme des Gegenstandes integriert sein.

Alternativ kann der Libellenadapter als separates Bauteil ausgebildet sein, welches getrennt vom Adapter mit dem Darstellungsbereich verbunden wird. Dadurch werden besonders kleine Bauteile erreicht, die einfach gelagert und versendet werden können.

Günstig ist es, wenn der Libellenadapter aus demselben Material wie der Adapter besteht. Als optisch und haptisch ansprechend hat sich insbesondere Polymethylmethacrylat bzw. Acrylglas erwiesen. Selbstverständlich kann der Libellenadapter auch aus anderen Materialen bestehen, beispielsweise Polystyrol oder Polycarbonat.

Es kann auch vorgesehen sein, dass unabhängig von einer Einstellung eines Betrachtungswinkels am Bildschirm eine Einrichtung zur Absolutwinkelmessung lösbar befestigt wird, mit welcher der Absenkungswinkel eingestellt wird. Dies kann beispielsweise eine Libelle mit einem Libellenadapter oder ein elektronischer Sensor wie ein Beschleunigungssensor sein. Bei Einsatz eines Bildschirmes, welcher eine eingebaute Kamera aufweist, kann dann der Betrachtungswinkel beispielsweise durch Darstellung eines von der Kamera aufgenommenen Bildes am Bildschirm ergonomisch korrekt justiert werden. Der durch die in den Bildschirm integrierte Kamera nicht einstellbare Absenkungswinkel wird dann durch die vorzugsweise lösbar am Bildschirm angeordnete Einrichtung zur Absolutwinkelmessung auf einfache Weise eingestellt.

Die weitere Aufgabe wird gelöst durch ein Set der eingangs genannten Art, welches einen Gegenstand, mit welchem ein Teil einer Umgebung des Gegenstandes auf einer Abbildung darstellbar ist, und ein Befestigungsmittel umfasst, mit welchem der Gegenstand auf einem Darstellungsbereich des Bildschirmes lösbar befestigbar ist. Ein solches Set ermöglicht eine Durchführung des erfindungsgemäßen Verfahrens mit einfachsten Mitteln.

Bevorzugt ist vorgesehen, dass der Gegenstand ein optisches Speichermedium ist, insbesondere eine CD, eine DVD oder eine Blu-Ray-Disc. Weil derartige Gegenstände aufgrund hoher Stückzahlen günstig herstellbar sind, sind dadurch zur Durchführung des Verfahrens erforderliche Kosten minimiert.

Eine einfache und lösbare Haftung des Gegenstandes kann am Darstellungsbereich günstig erreicht werden, wenn das Befestigungsmittel eine Adhäsionsfolie umfasst und insbesondere lösbar mit dem Gegenstand verbindbar ist. Dies kann beispielsweise durch einen Adapter erfolgen, welcher formschlüssig mit dem Gegenstand verbindbar ist und auf einer Seite eine Adhäsionsfolie aufweist, welche mit dem Darstellungsbereich lösbar verbindbar ist. Derartige Folien werden auch Gecko-Folien genannt und können mehrmals zur Herstellung einer lösbaren Verbindung eingesetzt werden. Alternativ ist auch eine Ausführung des Adapters mit einem Saugnapf zur Befestigung des Gegenstandes am Darstellungsbereich möglich.

Um mit dem Set auch einen Absenkungswinkel korrekt einzustellen, ist es günstig, wenn das Set einen Libellenadapter umfasst, mit welchem eine definierte absolute Bildschirmneigung einstellbar ist, wobei insbesondere mit dem Libellenadapter eine Libelle starr verbunden ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 einen Bildschirm mit einem Gegenstand zur Durchführung des erfindungsgemäßen Verfahrens;
Fig. 2 eine schematische Darstellung eines Bildschirmarbeitsplatzes;
Fig. 3 und 4 einen Adapter für ein erfindungsgemäßes Set;
Fig. 5 und 6 verschiedene Ausführungen eines Libellenadapters samt Libelle;
Fig. 7 bis 11 verschiedene Ausführungen eines erfindungsgemäßen Sets;
Fig. 12 eine Libelle für ein erfindungsgemäßes Set in einer Draufsicht;
Fig. 13 einen Bildschirm mit einem Gegenstand und einem Libellenadapter zur Durchführung des erfindungsgemäßen Verfahrens;
Fig. 14 eine weitere schematische Darstellung eines Bildschirmarbeitsplatzes;
Fig. 15 einen Schnitt durch einen weiteren Adapter mit einem Gegenstand zur Durchführung des erfindungsgemäßen Verfahrens;
Fig. 16 und 17 eine weitere Ausführung eines Libellenadapters samt Libelle für ein erfindungsgemäßes Set in verschiedenen Schnittdarstellungen.

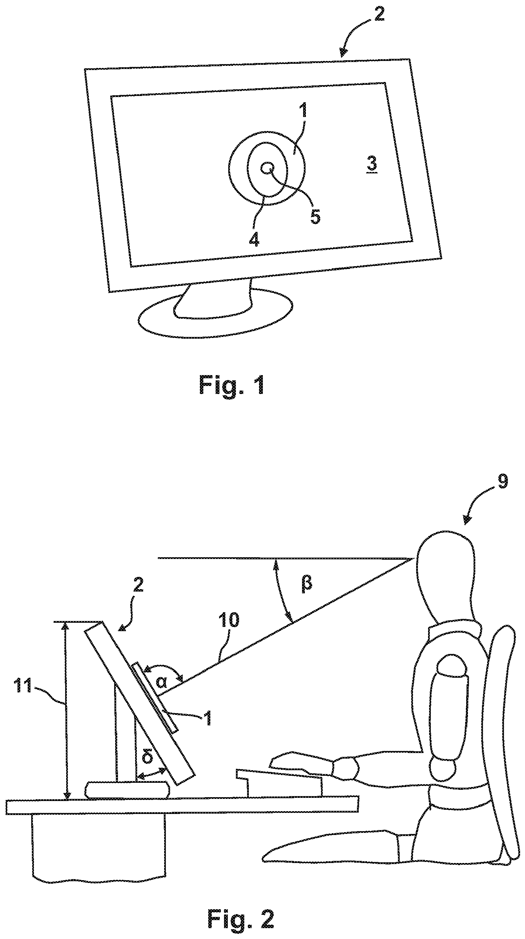

Fig. 1 und 2 zeigen einen Bildschirm 2, wobei auf einem Darstellungsbereich 3 des Bildschirmes 2 zentrisch ein als DVD ausgeführter Gegenstand 1 lösbar befestigt ist. Dabei ist die DVD durch einen Adapter 5 mit dem Darstellungsbereich 3 verbunden, welcher lösbar an einer zentrischen Aufnahmeöffnung mit der DVD verbunden ist. Bei dieser Ausführung besteht das erfindungsgemäße Set aus einer DVD und dem Adapter 5, welcher lösbar mit dem Darstellungsbereich 3 des Bildschirmes 2 und der DVD verbindbar ist. Eine ergonomisch korrekte Justierung des Bildschirmes 2 erfolgt für einen vor dem Bildschirm 2 befindlichen Benutzer 9 durch Variieren einer Höhe 11 und eines Bildschirmwinkels ö des Bildschirmes 2, bis eine Reflexion des Benutzers 9 auf der DVD, aus einer Position des Benutzers 9 betrachtet, innerhalb einer auf der DVD angebrachten Markierung 4 erscheint.

Fig. 2 zeigt in ergänzter Darstellung einen Bildschirmarbeitsplatz samt einem Benutzer 9. Ersichtlich ist, dass auf dem Bildschirm 2 im Darstellungsbereich 3 des Bildschirmes 2 der als DVD ausgebildete Gegenstand 1 angeordnet ist, wobei eine reflektierende Oberfläche der DVD vorzugsweise parallel zu einer Ebene des Darstellungsbereiches 3 positioniert ist. Bei Durchführung des Verfahrens werden Höhe 11 und Bildschirmwinkel δ des Bildschirmes 2 relativ zum Benutzer 9 variiert, bis sich der Benutzer 9 in der DVD sieht. Dies erfolgt genau dann, wenn ein Betrachtungswinkel α zwischen einer Blicklinie 10 des Benutzers 9 und einer Ebene, in welcher der Darstellungsbereich 3 liegt, etwa 90° beträgt. Durch zentrische Anordnung der DVD am Darstellungsbereich 3 wird ein korrekter Betrachtungswinkel α zu einer Mitte des Darstellungsbereiches 3 bzw. zu einer Bildschirmmitte sichergestellt. Weil eine korrekte Entfernung zwischen Benutzer 9 und Bildschirm 2 einer Länge eines Armes des Benutzers 9 entspricht, kann eine optimale Entfernung zwischen dem Bildschirm 2 und dem Benutzer 9 besonders einfach eingestellt werden, wenn der Bildschirm 2 durch den Benutzer 9 mit ausgestreckten Armen aus der einer Sitzposition des Benutzers 9 justiert wird. Weiter ist es für eine ergonomisch korrekte Bildschirmposition günstig, wenn ein Absenkungswinkel β, um welchen die Blicklinie 10 aus einer Waagrechten abgesenkt ist, 15° bis 35° beträgt. Dieser korrekte Absenkungswinkel β kann durch den Benutzer 9 im erfindungsgemäßen Verfahren einfach erreicht werden, indem der Bildschirm 2 justiert wird, bis sich der Benutzer 9 in einer Reflexion an der DVD sieht und sein Kopf dabei leicht nach unten geneigt ist. Nach Durchführung des erfindungsgemäßen Verfahrens wird die DVD vom Darstellungsbereich 3 entfernt und kann zur Justierung eines weiteren Bildschirmes 2 eingesetzt werden.

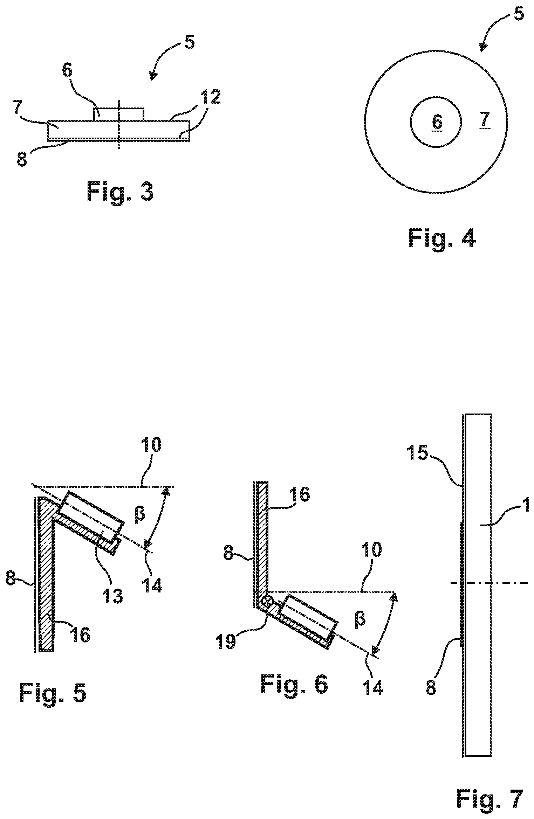

Fig. 3 und 4 zeigen einen Adapter 5 gemäß Fig. 1 für ein erfindungsgemäßes Set im Detail. Der dargestellte Adapter 5 ist für einen als CD, DVD oder Blu-Ray-Disc ausgeführten Gegenstand 1 ausgebildet und weist ein Oberteil 6 auf, welches mit einer zentrischen kreisrunden Aufnahmeöffnung einer CD, DVD oder Blu-Ray-Disc lösbar verbindbar ist, beispielsweise durch Stecken des Oberteiles 6 in die Aufnahmeöffnung. Weiter ist ein vorzugsweise zylindrisch ausgebildetes Unterteil 7 vorgesehen, welches parallele Flächen 12 aufweist, um die CD, DVD oder Blu-Ray-Disc parallel zum Darstellungsbereich 3 auf demselben zu positionieren. Zur lösbaren Verbindung des Adapters 5 mit dem Darstellungsbereich 3 eines Bildschirmes 2 ist eine am Unterteil 7 angeordnete Haftfolie vorgesehen. Dabei können beispielsweise verschiedenste Klebefolien eingesetzt werden. Eine besonders rückstandsfreie Haftung des Adapters 5 am Darstellungsbereich 3 ist möglich, wenn wie im dargestellten Ausführungsbeispiel eine Adhäsionsfolie 8 eingesetzt wird, welche auch Gecko-Folie genannt wird.

Das erfindungsgemäße Verfahren ermöglicht eine einfache und schnelle ergonomisch korrekte Justierung eines Bildschirmes 2, sodass Folgeschäden einer falschen Bildschirmpositionierung einfach vermeidbar sind. Weiter ist ein erfindungsgemäßes Set für das Verfahren günstig herstellbar, weswegen auch Kosten zur Durchführung des Verfahrens minimal sind.

Fig. 5 und 6 zeigen Ausführungen eines vorzugsweise aus Kunststoff oder Acryglas bestehenden Libellenadapters 16, mit welchem eine Bildschirmneigung einstellbar ist. Eine ergonomisch korrekte Bildschirmneigung ergibt einen Absenkungswinkel β von 15° bis 35°, sodass der Darstellungsbereich 3 unter diesem Winkel zu einer Vertikalen steht. Der Libellenadapter 16 weist zwei Schenkel auf, wobei an einem ersten Schenkel meist eine Adhäsionsfolie 8 wie eine Gecko-Folie vorgesehen ist, durch welche der Libellenadapter 16 lösbar mit dem Darstellungsbereich 3 des Bildschirmes 2 verbindbar ist. An einem zweiten Schenkel des Libellenadapters 16 ist eine Libelle 13 angeordnet, wobei eine Libellenachse 14 unter einem zum Absenkungswinkel β komplementären Winkel zum ersten Schenkel angeordnet ist, sodass bei korrekter Ausrichtung des Bildschirmes 2 die Blicklinie 10 unter dem Absenkungswinkel β auf die Libellenachse 14 steht. Die Libelle 13 kann als Dosenlibelle oder Röhrenlibelle ausgeführt sein, um eine Auslenkung aus der Waagerechten in einer oder zwei Richtungen messen zu können. Für eine einfache Ausführung hat sich ein Einsatz einer Röhrenlibelle als zweckmäßig erwiesen. Die Libelle 13 kann ein integraler Bestandteil des Libellenadapters 16 sein, beispielsweise wenn der Libellenadapter 16 als Gussteil ausgebildet ist. Alternativ kann die Libelle 13 auch als zusätzlicher Bauteil ausgeführt sein, welcher mit dem Libellenadapter 16 verbunden ist. Dabei kann eine Verbindung beispielsweise durch einen Formschluss, eine Klebe- oder eine Schweißverbindung hergestellt sein. Für eine gute Sichtbarkeit bei schlechten Lichtverhältnissen kann die Libelle 13 fluoreszierende oder illuminierte Elemente aufweisen

In Fig. 6 ist eine alternative Ausführung dargestellt, wobei der erste Schenkel und der zweite Schenkel nicht starr, sondern um eine Drehachse 19 drehbar verbunden sind, um den Libellenadapter 16 einfach für verschiedene Absenkungswinkel β einsetzen zu können. Es kann hierzu eine Skala oder ein Raster am Libellenadapter 16 zur Einstellung eines beliebigen Absenkungswinkels β vorgesehen sein. Ob ein Libellenadapter 16 nach Fig. 6, bei welchem der erste Schenkel oberhalb des zweiten Schenkels angeordnet ist, oder ein Libellenadapter 16 nach Fig. 5 eingesetzt wird, kann von einem optischen Eindruck am Arbeitsplatz abhängig gemacht werden.

Fig. 7 zeigt eine Ausführung eines Gegenstandes 1 zur Durchführung des erfindungsgemäßen Verfahrens, welcher nicht als optisches Speichermedium ausgebildet ist. Ein Gegenstand 1 gemäß Fig. 7, welcher auch als Kunststoffspiegel ausgebildet sein kann, umfasst einen transparenten Kunststoffkörper, insbesondere bestehend aus Polymethylmethacrylat bzw. Acrylglas. An einer Rückseite ist eine reflektierende Schicht 15 vorgesehen, mit welcher die Abbildung des Benutzers 9 als Reflexion darstellbar ist. Zur Befestigung des Gegenstandes 1 am Darstellungsbereich 3 ist an der rückseitig angeordneten reflektierenden Schicht 15 eine Adhäsionsfolie 8 vorgesehen.

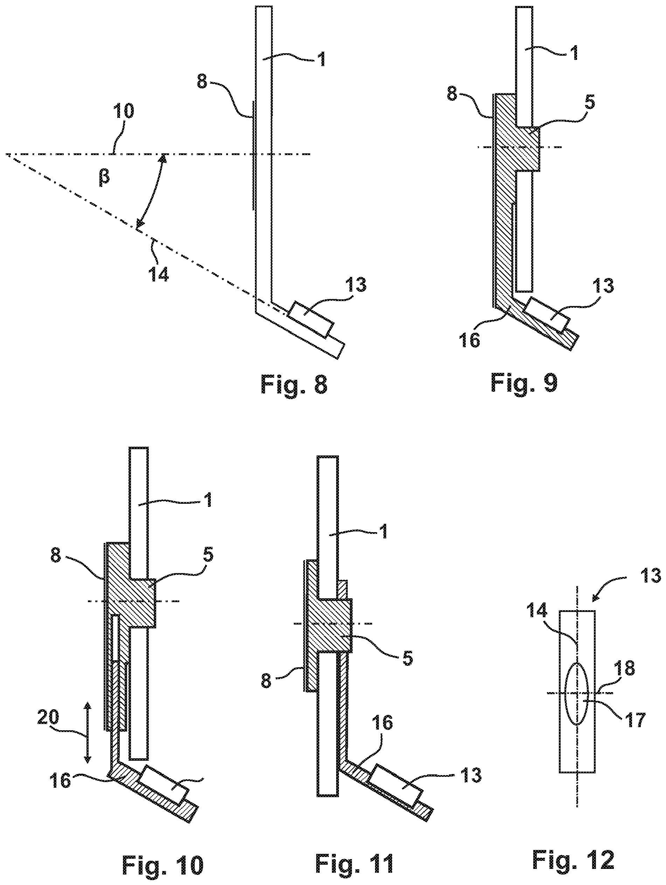

Fig. 8 zeigt einen Gegenstand 1 nach Fig. 7, wobei integral mit dem Gegenstand 1 ein Libellenadapter 16 verbunden ist, welcher eine Libelle 13 aufweist. Die Libellenachse 14 steht dabei unter dem Absenkungswinkel β auf eine zum Gegenstand 1 senkrechte Blicklinie 10.

Fig. 9 bis 11 zeigen jeweils ein erfindungsgemäßes Set, mit welchem sowohl ein korrekter Betrachtungswinkel α als auch ein korrekter Absenkungswinkel β einstellbar sind, wobei der Gegenstand 1 meist als DVD ausgeführt und an einem Adapter 5 lösbar befestigt ist. Bei der Ausführung nach Fig. 9 ist mit dem Adapter 5 integral ein Libellenadapter 16 verbunden. Bei der Ausführung nach Fig. 10 ist der Libellenadapter 16 entlang einer Verschieberichtung 20 bewegbar mit dem Adapter 5 verbunden, um eine gute Anpassung des Sets zu ermöglichen. Fig. 11 zeigt eine Ausführung, wobei der Libellenadapter 16 wie die DVD lösbar mit dem Adapter 5 durch einen Formschluss verbunden ist.

Eine als Röhrenlibelle ausgeführte Libelle 13 ist schematisch in Fig. 12 dargestellt. Ist die Libelle 13 durch einen Libellenadapter 16 wie vorstehend beschrieben am Bildschirm 2 angeordnet, befindet sich eine Luftblase 17 bei korrekter Bildschirmneigung in einer Libellenmitte 18 in einem gekennzeichneten Bereich. Eine falsche Bildschirmneigung führt zu einer Verschiebung der Luftblase 17 aus dem gekennzeichneten definierten Bereich in der Libellenmitte 18, wodurch eine einfache Einstellbarkeit der Bildschirmneigung gegeben ist.

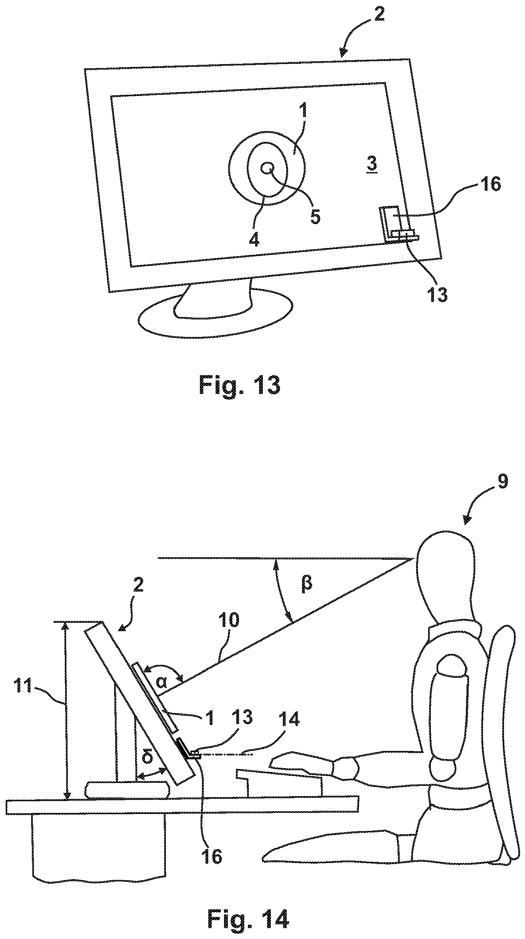

Fig. 13 zeigt einen Bildschirm 2, an welchem einerseits durch einen Adapter 5 ein Gegenstand 1 mit einer Markierung 4 zur Justierung des Betrachtungswinkels α und andererseits ein Libellenadapter 16 nach Fig. 6 mit einer Libelle 13 zur korrekten Justierung des Absenkungswinkels β angeordnet sind. Der Libellenadapter 16 ist dabei gesondert vom Adapter 5 durch eine Gecko-Folie lösbar am Darstellungsbereich 3 des Bildschirms 2 befestigt.

Fig. 14 zeigt schematisch einen Bildschirmarbeitsplatz mit einem Bildschirm 2, an welchem der Gegenstand 1 und der Libellenadapter 16 samt Libelle 13 für das erfindungsgemäße Verfahren angeordnet sind. Zur Durchführung des Verfahrens wird üblicherweise in einem ersten Schritt ein korrekter Bildschirmwinkel ö bzw. ein Absenkungswinkel β mittels des Libellenadapters 16 und der Libelle 13 eingestellt, wobei der Bildschirmwinkel ö variiert wird, bis die Libelle 13 in einer waagerechten Position ist. Dies ist anhand der im gekennzeichneten Bereich in der Libellenmitte 18 befindlichen Luftblase 17 für den Benutzer 9 einfach erkennbar. In einem zweiten Schritt wird anschließend die Höhe 11 des Bildschirmes 2 verändert, bis sich der Benutzer 9 in einer Reflexion des Gegenstandes 1 mittig sieht. Dadurch kann eine ergonomisch korrekte Justierung des Bildschirmes 2 auf einfache Weise erfolgen.

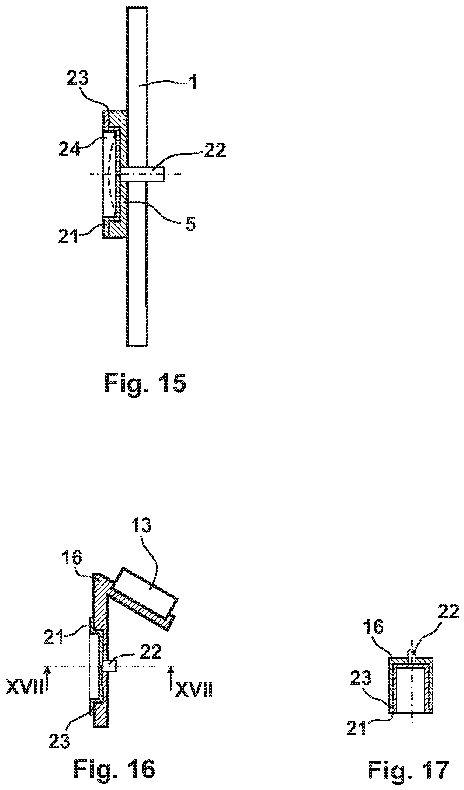

Fig. 15 zeigt einen mit einem Adapter 5 an einem Bildschirm 2 befestigbaren Gegenstand 1 zur Durchführung des erfindungsgemäßen Verfahrens. Dabei ist der Adapter 5 durch einen Saugnapf 21 mit einem Darstellungsbereich 3 eines Bildschirmes 2 lösbar verbindbar. Wie dargestellt ist der Saugnapf 21 in einer rückseitigen Ausnehmung des Adapters 5 angeordnet, sodass eine einfache parallele Positionierung des üblicherweise reflektierenden Gegenstandes 1 gegenüber dem Darstellungsbereich 3 des Bildschirmes 2 möglich ist. Der Saugnapf 21 ist in einem Randbereich mit dem Adapter 5 durch eine Verklebung 23 verbunden. Ein mittiger Bereich des Saugnapfes 21 ist gegenüber dem Adapter 5 bewegbar, sodass zwischen üblicherweise dem aus Gummi oder dergleichen bestehendem Saugnapf 21 und einem Bildschirm 2 ein Hohlraum 24 mit veränderbarem Volumen gebildet wird. Ein Volumen des Hohlraumes 24 kann durch Betätigen eines Betätigungstasters 22 verändert werden, um für eine Befestigung des Adapters 5 am Bildschirm 2 mittels des Saugnapfes 21 einen Unterdruck im Hohlraum 24 zu erzeugen. Um den Adapter 5 vom Bildschirm 2 zu lösen, wird ebenfalls der Betätigungstaster 22 gedrückt, wodurch ein mittiger Bereich des Saugnapfes 21 in eine durch eine strichlierte Linie angedeutete Position gebracht wird, sodass im Hohlraum 24 kein Unterdruck mehr vorliegt.

Fig. 16 und 17 zeigen Schnitte durch eine weitere Ausführungsform eines Libellenadapters 16 samt Libelle 13. Dabei zeigt Fig. 17 einen Schnitt durch einen Libellenadapter 16 entlang der Linie XVII-XVII in Fig. 16. Wie ersichtlich ist der Libellenadapter 16 durch einen in einer rückseitigen Ausnehmung angeordneten Saugnapf 21 an einem Bildschirm 2 befestigbar ist. Dabei ist der Saugnapf 21 an einem Rand durch eine Verklebung 23 mit dem Libellenadapter 16 verbunden. Auch bei dieser Ausführung ist eine Größe eines Hohlraumes 24 zwischen Saugnapf 21 und Bildschirm 2 ähnlich dem in Fig. 15 dargestellten Saugnapf 21 durch Betätigen eines Betätigungstasters 22 von einer Vorderseite des Libellenadapters 16 aus veränderbar, da der Betätigungstaster 22 durch den Libellenadapter 16 ragt. Somit kann die Libelle 13 bzw. der Libellenadapter 16 auf einfache Weise wiederholbar lösbar mit einem Darstellungsbereich 3 eines Bildschirmes 2 verbunden werden, um den Bildschirm 2 ergonomisch korrekt auszurichten.

## Patentansprüche

1. Verfahren zur ergonomisch korrekten Justierung eines Bildschirmes (2), **dadurch gekennzeichnet, dass** ein Gegenstand (1) lösbar auf einem Darstellungsbereich (3) des Bildschirmes (2) angeordnet wird, mit welchem ein vor dem Bildschirm (2) sitzender Benutzer (9) auf einer Abbildung dargestellt wird, wonach eine Position des Bildschirmes (2) variiert wird, bis eine Darstellung des Benutzers (9) innerhalb vordefinierter Grenzen der Abbildung ist.

2. Verfahren nach Anspruch 1, **dadurch gekennzeichnet, dass** ein reflektierender Gegenstand (1) eingesetzt wird, welcher bevorzugt eine Markierung (4) aufweist.

3. Verfahren nach Anspruch 1 oder 2, **dadurch gekennzeichnet, dass** ein als optisches Speichermedium ausgebildeter Gegenstand (1) eingesetzt wird, insbesondere eine CD, eine DVD oder eine Blu-Ray-Disc.

4. Verfahren nach einem der Ansprüche 1 bis 3, **dadurch gekennzeichnet, dass** der Gegenstand (1) mit einem Adapter (5) lösbar verbunden wird, welcher mit dem Darstellungsbereich (3) des Bildschirmes (2) lösbar verbindbar ist.

5. Verfahren nach einem der Ansprüche 1 bis 4, **dadurch gekennzeichnet, dass** der Gegenstand (1) zentrisch im Darstellungsbereich (3) angeordnet wird.

6. Verfahren nach einem der Ansprüche 1 bis 5, **dadurch gekennzeichnet, dass** ein ergonomisch günstiger Absenkungswinkel (β) mittels einer unter einem definierten Winkel mit dem Darstellungsbereich (3) verbundenen Libelle (13) eingestellt wird.

7. Set zur Durchführung eines Verfahrens nach einem der Ansprüche 1 bis 6, **dadurch gekennzeichnet, dass** das Set einen Gegenstand (1), mit welchem ein Teil einer Umgebung des Gegenstandes (1) auf einer Abbildung darstellbar ist, und ein Befestigungsmittel umfasst, mit welchem der Gegenstand (1) auf einem Darstellungsbereich (3) eines Bildschirmes (2) lösbar befestigbar ist.

8. Set nach Anspruch 7, **dadurch gekennzeichnet, dass** der Gegenstand (1) ein optisches Speichermedium ist, insbesondere eine CD, eine DVD oder eine Blu-Ray-Disc.

9. Set nach Anspruch 7 oder 8, **dadurch gekennzeichnet, dass** das Befestigungsmittel eine Adhäsionsfolie (8) umfasst und insbesondere lösbar mit dem Gegenstand (1) verbindbar ist.

10. Set nach einem der Ansprüche 7 bis 9, **dadurch gekennzeichnet, dass** das Set einen Libellenadapter (16) umfasst, mit welchem eine definierte absolute Bildschirmneigung einstellbar ist, wobei insbesondere mit dem Libellenadapter (16) eine Libelle (13) starr verbunden ist.

## Claims

1. Method for an ergonomically correct adjustment of a screen (2), **characterized in that** an object (1) is removably arranged on a display region (3) of the screen (2), with which object a user (9) sitting in front of the screen (2) is depicted on an image, whereupon a position of the screen (2) is modified until a depiction of the user (9) is within predefined borders of the image.

2. Method according to claim 1, **characterized in that** a reflective object (1) is used which preferably comprises a marking (4).

3. Method according to claim 1 or 2, **characterized in that** an object (1) embodied as an optical storage medium is used, in particular a CD, DVD or Blu-ray disc.

4. Method according to one of claims 1 through 3, **characterized in that** the object (1) is removably connected to an adapter (5) that can be removably connected to the display region (3) of the screen (2).

5. Method according to one of claims 1 through 4, **characterized in that** the object (1) is centrally arranged in the display region (3).

6. Method according to one of claims 1 through 5, **characterized in that** an ergonomically advantageous deflection angle (ß) is adjusted by means of a level (13) connected to the display region (3) at a defined angle.

7. Set for carrying out a method according to one of claims 1 through 6, **characterized in that** the set comprises an object (1) with which a part of a surrounding region of the object (1) can be depicted on an image and a means of attachment with which the object (1) can be removably attached to a display region (3) of a screen (2).

8. Set according to claim 7, **characterized in that** the object (1) is an optical storage medium, in particular a CD, DVD or Blu-ray disc.

9. Set according to claim 7 or 8, **characterized in that** the means of attachment comprises a cling film (8) and, in particular, is removably connected to the object (1).

10. Set according to one of claims 7 through 9, **characterized in that** the set comprises a level adapter (16) with which a defined absolute screen tilt angle can be adjusted, wherein in particular a level (13) is connected to the level adapter (16) in a fixed manner.

## Revendications

1. Méthode pour le réglage ergonomiquement correct d'un écran (2), **caractérisée en ce qu'**un objet (1) est disposé de manière mobile sur une zone de représentation (3) de l'écran (2) avec lequel un utilisateur (9) assis devant l'écran (2) est représenté sur une image, selon laquelle une position de l'écran (2) peut être modifiée jusqu'à ce qu'une représentation de l'utilisateur (9) se trouve à l'intérieur de limites prédéfinies de l'image.

2. Méthode selon la revendication 1, **caractérisée en ce qu'**un objet réfléchissant (1) est utilisé, lequel comporte de préférence un marquage (4).

3. Méthode selon la revendication 1 ou 2, **caractérisée en ce qu'**un objet (1) constitué comme moyen de mémorisation optique est utilisé, notamment un disque compact (DC), un disque vidéonumérique (DVN) ou un disque Blu-Ray.

4. Méthode selon l'une quelconque des revendications 1 à 3, **caractérisée en ce que** l'objet (1) est relié de manière amovible à un adaptateur (5), lequel peut être relié de manière amovible à la zone de représentation (3) de l'écran (2).

5. Méthode selon l'une quelconque des revendications 1 à 4, **caractérisée en ce que** l'objet (1) est disposé de façon centrale dans la zone de représentation (3).

6. Méthode selon l'une quelconque des revendications 1 à 5, **caractérisée en ce qu'**un angle d'abaissement (β) ergonomiquement favorable est réglé au moyen d'un niveau à bulle (13) relié sous un angle défini à la zone de représentation (3).

7. Ensemble destinée à l'exécution d'une méthode selon l'une quelconque des revendications 1 à 6, **caractérisé en ce que** l'ensemble comporte un objet (1) avec lequel une partie d'un environnement de l'objet (1) peut être représentée sur une image, et un moyen de fixation, avec lequel l'objet (1) peut être fixé de façon amovible sur une zone de représentation (3) d'un écran (2).

8. Ensemble selon la revendication 7, **caractérisé en ce que** l'objet (1) est un moyen de mémorisation optique, notamment un disque compact (DC), un disque vidéonumérique (DVN) ou un disque Blu-Ray.

9. Ensemble selon la revendication 7 ou 8, **caractérisé en ce que** le moyen de fixation comprend une feuille adhésive (8) qui peut être notamment reliée de façon amovible à l'objet (1).

10. Ensemble selon l'une quelconque des revendications 7 à 9, **caractérisée en ce que** l'ensemble comprend un niveau à bulle (16), avec lequel une inclinaison d'écran définie absolue peut être réglée, un niveau à bulle (13) étant notamment relié de façon fixe à l'adaptateur de niveau (16).
